# EUROPEAN PATENT SPECIFICATION

(11) **EP 2 950 604 B1**
(45) Date of publication and mention of the grant of the patent: **16.08.2017**
(21) Application number: 14305815.4
(22) Date of filing: 30.05.2014
(51) Int. Cl.: H04W 72/02, H04W 74/08

(54) **Channel selection**
Kanalauswahl
Sélection de canal

(43) Date of publication of application: 02.12.2015
(73) Proprietor: Alcatel Lucent, 92100 Boulogne-Billancourt (FR)
(72) Inventor: Tatesh, Said, Swindon, Wiltshire SN5 7DJ (GB); Baker, Matthew, Swindon, Wiltshire SN5 7DJ (GB)
(74) Representative: Berthier, Karine

(56) References cited:
- WO-A1-2012/171867
- US-A1- 2011 013 577
- US-A1- 2012 213 058

## Description

### FIELD OF THE INVENTION

The present invention relates to a wireless telecommunications network node method, a wireless telecommunications network node and a computer program product.

### BACKGROUND

Wireless telecommunications networks are known. In a cellular system, radio coverage is provided to user equipment, for example, mobile telephones, by geographical area. Those geographical areas of radio coverage are known as cells. A base station is located in each geographical area to provide the required radio coverage. A base station may support more than one cell providing coverage in the same geographical area. User equipment in the area served by a base station receives information data from that base station and transmits information and data to that base station.

Information and data transmitted by a base station to user equipment occurs on frequency channels of radio carriers known as downlink carriers. Information and data transmitted by user equipment to a base station occurs on frequency channels of radio carriers known as uplink carriers.

US 2011/0013577 A1 discloses a method for controlling user equipment access in a multi-frequency system. A network side receives an access preamble sent by a user equipment on one frequency. When the network side determines that the user equipment needs to access on another frequency, the network side notifies the user equipment to access by switching to another frequency.

WO 2012/171867 A1 discloses a communication device for communicating with a plurality of terminals using a frequency hopping sequence. The communication device is configured to determine that one of the plurality of terminals is subject to interference on a frequency in the frequency hopping sequence and to schedule communication with that terminal to avoid that frequency.

US 2012/0213058 A1 discloses systems and methodologies that facilitate random access procedures using one or more fallback access schemes after initial access attempts have failed. In one example, a fallback access scheme allows the user equipment to select a secondary carrier frequency for communication with a base station after initial access attempt on a first carrier frequency has failed.

Although various techniques exist for selecting these frequency channels, unexpected consequences can occur.

Accordingly, it is desired to provide an improved technique for frequency channel selection.

### SUMMARY

According to a first aspect, there is provided a wireless telecommunications network node method, as claimed in claim 1.

The first aspect recognises that operation of radio systems in shared, unmanaged or unlicensed spectrum necessitates that a transmitter operate a mechanism to select a transmission frequency channel that is not being used at the same time by another transmitter. One existing technique to ensure that a selected transmission frequency channel is not being used by another transmitter is a so-called clear channel assessment (CCA) procedure whereby a transmitter measures the radio channel on which it is contemplating transmission for a defined period prior to starting that transmission and, if the measured energy on that channel is below a certain level, it proceeds to transmit and otherwise does not. However, the first aspect recognises that this approach has a number of drawbacks. First, any interference energy detected at the transmitter may not be detectable by the intended receiver of that transmitter's transmissions due, for example, to the interferer being located nearer to the transmitter than to the intended receiver. Secondly, during the measurement time, the transmitter cannot transmit data, thereby increasing latency and potentially wasting useful transmission resources.

Accordingly, a method for a network node is provided. The method may comprise selecting or choosing a first channel as a transmission channel. The method may also comprise the step of transmitting information over the first channel. The method may also comprise determining a status or success of the transmission of the information using the first channel. The method may also comprise, when the determining determines that transmission of the information using the first frequency channel was successful, transmitting further information using the first frequency channel. The method may also comprise, when the determining determines that transmission of the information using the first frequency channel was unsuccessful, selecting a further frequency channel as the transmission channel and repeating the transmitting and determining using the further frequency channel. In this way, rather than trying to make an assessment of whether a particular channel is free or unused prior to making a transmission using that channel, instead the transmission occurs and an assessment is made of whether that transmission was successful or not. Upon it being determined that transmission of the information using the first frequency channel was successful, information is continued to be transmitted using that frequency channel. In this way, the network node can continue to perform such transmissions without interruption. Upon it being determined that the transmission of the information on the first frequency channel was not successful, another frequency channel may then be selected, the information repeated on that frequency channel and a determination made of whether that transmission was successful. Hence, should the transmission using the selected frequency channel not be received by the receiver, then a different frequency channel may be tried. This enables shared, unmanaged or unlicensed spectrum to be used, whilst avoiding assuming that interference may occur even when it may not and avoiding potentially wasting useful transmission resources.

In one embodiment, the determining determines that transmission of the information using the first frequency channel was successful on receipt of an indication of successful receipt from a receiving node. Accordingly, the receiving node may provide a positive indication to the network node that the information was successfully received.

In one embodiment, the indication of successful receipt is an acknowledgement message.

In one embodiment, the determining determines that transmission of the information using the first frequency channel was unsuccessful when an indication of successful receipt from a receiving node fails to be received within a time period. Hence, the absence of an indicator from the receiving node indicating that the transmissions were successfully received maybe used to infer that the transmission was unsuccessful. Typically, such an indication ought to be received within a specified time period and so failure to receive that indication within that time period is likely to indicate that the transmissions were unsuccessful.

In one embodiment, the determining determines that transmission of the information using the first frequency channel was unsuccessful on receipt of an indication of unsuccessful receipt from a receiving node. Accordingly, an indicator from the receiving node may indicate that the transmissions were not successfully received by the receiving node.

In one embodiment, the indication of unsuccessful receipt is a negative acknowledgement message.

In one embodiment, the further frequency channel differs in frequency from the first frequency channel. Accordingly, the further frequency channel may be different to the first frequency channel.

In one embodiment, the first frequency channel and the further frequency channel are randomly selected from a set of frequency channels. In this case the random selection of the further frequency channel may exclude the first frequency channel. It will be appreciated that the channels need not be randomly selected but that preferred channels or an ordered list of channels from which the network node may select may be specified.

The information is encoded using an encoding scheme selected from a group of encoding schemes each of which provides differing robustness to interference. The encoding scheme used for transmitting the information may provide greater robustness than the encoding scheme used for transmitting the further information. The encoding scheme used for transmitting the information may be that encoding scheme from the group which provides the greatest robustness to interference. The encoding scheme used for transmitting the further information may be an encoding scheme from the group which provides less robustness. Accordingly, the information may be transmitted to make it as robust as possible to interference in order to improve the likelihood that the transmission is successfully received by the receiver. This helps to ensure that only those channels which are severely conflicted are not selected for transmissions.

In one embodiment, the method comprises, following the selecting, preventing any monitoring for transmission using that frequency channel prior to the transmitting. Accordingly, any sensing or monitoring for transmissions on the selected frequency channel may be avoided.

In one embodiment, the method comprises, when the determining determines that transmission of the information using the further frequency channel was unsuccessful, iteratively selecting a yet further frequency channel as the transmission channel and repeating the transmitting and determining using each yet further frequency channel until the determining determines that transmission of the information using the yet further frequency channel was successful. Accordingly, should any transmission fail to be successful, then the network node may select another frequency channel for transmissions. It will be appreciated that where a group or set of frequency channels is available to the network node for such transmissions, then the network node may select any frequency channel of the group or set. The network node may identify those frequency channels which were not successful and then only select from the remainder of the group or set which have not yet been tried in order to improve the likelihood of selecting a frequency channel which is successful.

According to a second aspect, there is provided a wireless telecommunications network node, as claimed in claim 11.

In one embodiment, the determining logic determines that transmission of the information using the first frequency channel was successful on receipt of an indication of successful receipt from a receiving node.

In one embodiment, the indication of successful receipt is an acknowledgement message.

In one embodiment, the determining logic determines that transmission of the information using the first frequency channel was unsuccessful when an indication of successful receipt from a receiving node fails to be received within a time period.

In one embodiment, the determining logic determines that transmission of the information using the first frequency channel was unsuccessful on receipt of an indication of unsuccessful receipt from a receiving node.

In one embodiment, the indication of unsuccessful receipt is a negative acknowledgement message.

In one embodiment, the further frequency channel differs in frequency from the first frequency channel.

In one embodiment, the first frequency channel and the further frequency channel are randomly selected from a set of frequency channels.

The information is encoded using a first encoding scheme selected from a group of encoding schemes each of which provides differing robustness and the further information is encoded using a second encoding scheme selected from the group of encoding schemes, the first encoding scheme providing greater robustness than the second encoding scheme.

In one embodiment, the transmission logic is operable to preventing any monitoring for transmission using that frequency channel prior to transmitting.

In one embodiment, when the determining logic determines that transmission of the information using the further frequency channel was unsuccessful, the selection logic is operable to iteratively select a yet further frequency channel as the transmission channel, the transmission logic is operable to repeat the transmitting and determining logic is operable to determine using each yet further frequency channel until the determining logic determines that transmission of the information using the yet further frequency channel was successful.

According to a third aspect, there is provided a computer program product operable, when executed on a computer, to perform the method of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

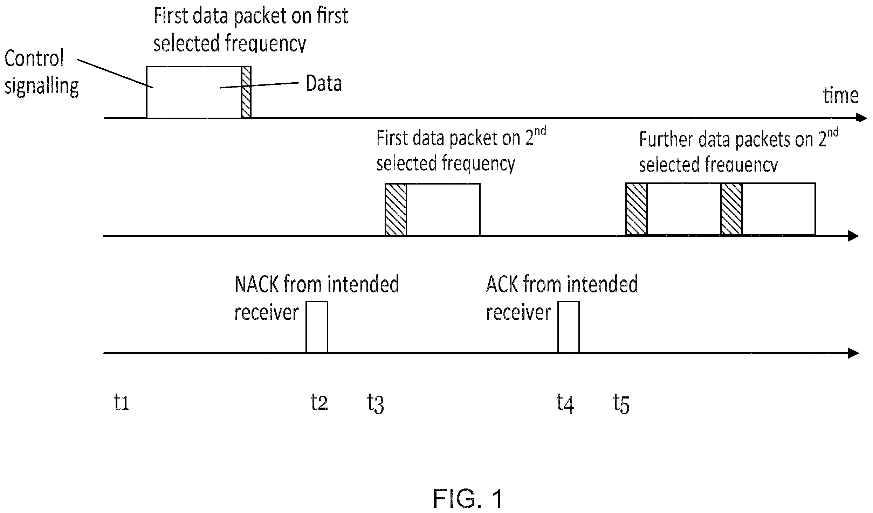

Figure 1 illustrates the operation of a transmitter according to one embodiment.

### DESCRIPTION OF THE EMBODIMENTS

Before discussing the embodiments in any more detail, first an overview will be provided. When a transmitter needs to select a frequency channel on which to transmit, a frequency channel is selected. Rather than then listening or sensing on that channel to see whether it is being used by another transmitter, the transmitter transmits data using the selected frequency channel without first waiting to see if the frequency channel is free or whether it is being used by another transmitter. The transmitter may then continue to use that frequency channel if the transmission was successful. Otherwise, the transmitter selects another frequency channel and then transmits using that newly selected frequency channel, again without first waiting to see if the frequency channel is free or whether it is being used by another transmitter. In some embodiments, the technique may be used after listening to verify that the frequency channel is free but without transmission of any sounding signal before the start of the data transmission. This process continues until a frequency channel which is not being utilised by another transmitter is found. Should a frequency channel being used by the transmitter cease to be suitable, then the frequency channel selection may be repeated until a suitable channel is found. This avoids the need to waste transmission resources listening or sensing for a clear frequency channel. It also avoids a frequency channel not being selected where the interference detectable at the transmitter is not detectable by the receiver of the transmitter's transmissions due to, for example, the interferer being located nearer to the transmitter than the receiver.

### EXAMPLE OPERATION

Figure 1 illustrates the operation of a transmitter according to one embodiment. The transmitter needs to select a frequency channel to carry its transmissions. The transmitter selects a first frequency channel to try for those transmissions. The selection may be random, may be based on previous successful transmissions or the transmitter may be provided with an ordered list for selecting the frequency channels. After selecting the frequency channel, rather than listening to the channel before performing transmissions, the transmitter instead transmits a first data packet to the intended receiver using the selected frequency channel at time tl. The transmitter then awaits feedback from the receiver indicating whether or not the first data packet was successfully received.

If an acknowledgement (ACK) is received, then the transmitter proceeds to transmit further packets to the receiver (or to other receivers) using the same frequency channel.

If a negative acknowledgement (NACK) is received or if no feedback is received at all, then the transmitter infers that the reason for the failure of the first data packet transmission was that the selected frequency channel is already in use for transmissions from another device and it therefore does not continue to transmit further packets using the first frequency channel. Instead, the transmitter may repeat the process, starting by selecting a second frequency channel which is different frequency channel to the first frequency channel.

In this example, at time t2, a NACK is received from the receiver indicating that the first data packet was not successfully received by the receiver.

Hence, the transmitter selects a different frequency channel and, at time t3, retransmits the first data packet on a second selected frequency channel.

At time t4, an ACK is received from the intended receiver indicating that the first data packet was successfully received by the receiver. Accordingly, the transmitter then proceeds at time t5 to transmit further data packets on the second selected frequency channel.

Such transmissions may then continue on the second selected frequency channel until it is detected that a transmitted packet was not successfully received. At that point, either the packet maybe re-transmitted in accordance with expected operations when transmitting such data packets or a new frequency channel may be selected as described above.

In embodiments, the first data packet employs the same signal design and protocols as any other data transmissions. For example, the first data packet and all subsequent data packets may use control and data channels, such as those envisaged by the Third Generation Partnership Project (3GPP) Long Term Evolution (LTE) wireless network specifications. By using existing signal design and protocols, no new signals, channels or protocols need to be designed for use in channel selection. For example, the signal design for LTE device-to-device (D2D) communications could be reused since this can operate without regular transmission of the synchronisation signals.

Also, in embodiments, the transmitter selects a conservative modulation and coding scheme for the first data packet so that only severe interference (such as might be typical of another simultaneously transmission in close vicinity) would be likely to cause the reception of that packet to fail, thus providing a good indication of whether the selected frequency channel is already in use or not.

In embodiments, after successfully capturing a frequency channel, this would be only for a configurable period after which the same procedure is applied of detecting the channel again after a backoff configurable period. It will be appreciated that the frequency channel will not be captured indefinitely after first success.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the invention as defined in the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunications network node method, comprising:
selecting a first frequency channel as a transmission channel;
transmitting information using said first frequency channel; and
determining a transmission status of said information using said first frequency channel wherein when said determining determines that transmission of said information using said first frequency channel was successful, the method comprises transmitting further information using said first frequency channel and when said determining determines that transmission of said information using said first frequency channel was unsuccessful, the method comprises selecting a further frequency channel as said transmission channel and repeating said transmitting and determining using said further frequency channel, and and **characterised in that** said information is encoded using a first encoding scheme selected from a group of encoding schemes each of which provides differing robustness and said further information is encoded using a second encoding scheme selected from said group of encoding schemes, said first encoding scheme providing greater robustness than said second encoding scheme.

2. The method of claim 1, wherein said determining determines that transmission of said information using said first frequency channel was successful on receipt of an indication of successful receipt from a receiving node.

3. The method of claim 2, wherein said indication of successful receipt is an acknowledgement message.

4. The method of any preceding claim, wherein said determining determines that transmission of said information using said first frequency channel was unsuccessful when an indication of successful receipt from a receiving node fails to be received within a time period.

5. The method of any preceding claim, wherein said determining determines that transmission of said information using said first frequency channel was unsuccessful on receipt of an indication of unsuccessful receipt from a receiving node.

6. The method of claim 5, wherein said indication of unsuccessful receipt is a negative acknowledgement message.

7. The method of any preceding claim, wherein said further frequency channel differs in frequency from said first frequency channel.

8. The method of any preceding claim, wherein said first frequency channel and said further frequency channel are randomly selected from a set of frequency channels.

9. The method of any preceding claim, comprising, following said selecting, preventing any monitoring for transmission using that frequency channel prior to said transmitting.

10. The method of any preceding claim, comprising, when said determining determines that transmission of said information using said further frequency channel was unsuccessful, iteratively selecting a yet further frequency channel as said transmission channel and repeating said transmitting and determining using each said yet further frequency channel until said determining determines that transmission of said information using said yet further frequency channel was successful.

11. A wireless telecommunications network node, comprising:
selection logic operable to select a first frequency channel as a transmission channel;
transmission logic operable to transmit information using said first frequency channel; and
determining logic operable to determine a transmission status of said information using said first frequency channel wherein when the determining logic determines that transmission of the information using the first frequency channel was successful, the transmission logic is operable to transmit further information using the first frequency channel and when the determining logic determines that transmission of the information using the first frequency channel was unsuccessful, the selection logic is operable to select a further frequency channel as the transmission channel and the transmission logic is operable to repeat the transmitting and the determining logic is operable to repeat the determining using the further frequency channel, and **characterised in that** said information is encoded using a first encoding scheme selected from a group of encoding schemes each of which provides differing robustness and said further information is encoded using a second encoding scheme selected from said group of encoding schemes, said first encoding scheme providing greater robustness than said second encoding scheme.

12. A computer program operable, when executed on a computer, to perform the method steps of any one of claims 1 to 10.

## Patentansprüche

1. Verfahren für drahtlosen Telekommunikationsnetzwerkknoten, umfassend:
Auswählen eines ersten Frequenzkanals als Übertragungskanal;
Übertragen von Information unter Verwendung des besagten ersten Frequenzkanals; und
Bestimmen eines Übertragungsstatus besagter Information unter Verwendung des ersten Frequenzkanals, wobei, wenn besagtes Bestimmen bestimmt, dass die Übertragung der besagten Information unter Verwendung des ersten Frequenzkanals erfolgreich war, das Verfahren das Übertragen weiterer Information umfasst, unter Verwendung des besagten ersten Frequenzkanals, und wenn besagtes Bestimmen bestimmt, dass die Übertragung der besagten Information unter Verwendung des ersten Frequenzkanals nicht erfolgreich war, das Verfahren des Auswählens weiterer Frequenzkanäle als besagten Übertragungskanal umfasst sowie das Wiederholen des besagten Übertragens und Bestimmens unter Verwendung des besagten ersten Frequenzkanals, und **dadurch gekennzeichnet, dass** die besagte Information codiert wird unter Verwendung eines ersten Codierungsschemas, ausgewählt aus einer Gruppe von Codierungsschemata, von denen jedes unterschiedliche Stabilität bereitstellt, und besagte weitere Information codiert wird unter Verwendung eines zweiten Codierungsschema, ausgewählt aus besagter Gruppe von Codierungsschemata, wobei das erste Codierungsschema eine bessere Stabilität als das besagte zweite Codierungsschema bereitstellt.

2. Verfahren nach Anspruch 1, wobei besagtes Bestimmen bestimmt, das die Übertragung besagter Information unter Verwendung des besagten ersten Frequenzkanals erfolgreich ist, wenn eine Anzeige eines erfolgreichen Empfangs von einem Empfangsknoten empfangen wird.

3. Verfahren nach Anspruch 2, wobei besagte Anzeige des erfolgreichen Empfangs eine Bestätigungsnachricht ist.

4. Verfahren nach einem beliebigen der vorstehenden Ansprüche, wobei besagtes Bestimmen bestimmt, dass die Übertragung von besagter Information unter Verwendung des besagten ersten Frequenzkanals nicht erfolgreich ist, wenn eine Anzeige eines erfolgreichen Empfangs von einem Empfangsknoten nicht innerhalb eines bestimmten Zeitraums empfangen wird.

5. Verfahren nach einem beliebigen der vorstehenden Ansprüche, wobei besagtes Bestimmen bestimmt, dass die Übertragung besagter Information unter Verwendung des besagten ersten Frequenzkanals nicht erfolgreich ist, wenn eine Anzeige eines nicht erfolgreichen Empfangs von einem Empfangsknoten empfangen wird.

6. Verfahren nach Anspruch 5, wobei besagte Anzeige des nicht erfolgreichen Empfangs eine negative Bestätigungsnachricht ist.

7. Verfahren nach einem beliebigen der vorstehenden Ansprüche, wobei besagter weiterer Frequenzkanal in der Frequenz vom besagten ersten Frequenzkanals abweicht.

8. Verfahren nach einem beliebigen der vorstehenden Ansprüche, wobei besagter erster Frequenzkanals und besagter weiterer Frequenzkanal zufällig aus einem Satz von Frequenzkanälen ausgewählt wurden.

9. Verfahren nach einem beliebigen der vorstehenden Ansprüche, umfassend, nach besagtem Auswählen, das Verhindern jeglicher Überwachung für die Übertragung unter Verwendung des Frequenzkanals vor dem besagten Übertragen.

10. Verfahren nach einem beliebigen der vorstehenden Ansprüche, umfassend, wenn besagtes Bestimmen bestimmt, dass die Übertragung besagter Information unter Verwendung des besagten weiteren Frequenzkanals nicht erfolgreich war, das wiederholte Auswählen noch eines weiteren Frequenzkanals als besagten Übertragungskanal und das Wiederholen des besagten Übertragens und das Bestimmen unter Verwendung jedes der besagten noch weiteren Frequenzkanäle, bis besagtes Bestimmen bestimmt, dass die Übertragung besagter Information unter Verwendung des besagten noch weitereren Frequenzkanals erfolgreich war.

11. Drahtloser Telekommunikationsnetzwerkknoten, umfassend:
betriebsfähige Auswahllogik zum Auswählen eines ersten Frequenzkanals als Übertragungskanal;
betriebsfähige Übertragungslogik zum Übertragen von Information unter Verwendung des besagten ersten Frequenzkanals; und
betriebsfähige Logik zur Bestimmung zum Bestimmen eines Übertragungsstatus besagter Information unter Verwendung des ersten Frequenzkanals, wobei, wenn die besagte Logik zur Bestimmung bestimmt, dass die Übertragung der Information unter Verwendung des ersten Frequenzkanals erfolgreich war, die Übertragungslogik betriebsfähig ist zum Übertragen weiterer Information unter Verwendung des besagten ersten Frequenzkanals, und wenn die besagte Logik zur Bestimmung bestimmt, dass die Übertragung der Information unter Verwendung des ersten Frequenzkanals nicht erfolgreich war, die Auswahllogik betriebsfähig ist zum Auswählen eines weiteren Frequenzkanals als Übertragungskanal und die Übertragungslogik betriebsfähig ist zum Wiederholen des Übertragens und die Logik zur Bestimmung betriebsfähig ist zum Wiederholen des Bestimmens unter Verwendung des weiteren Frequenzkanals, und **dadurch gekennzeichnet, dass** besagte Information codiert wird unter Verwendung eines ersten Codierungsschemas, ausgewählt aus einer Gruppe von Codierungsschemata, von denen jedes unterschiedliche Stabilität bereitstellt, und besagte weitere Information codiert wird unter Verwendung eines zweiten Codierungsschemas, ausgewählt aus besagter Gruppe von Codierungsschemata, wobei das erste Codierungsschema eine bessere Stabilität als das besagte zweite Codierungsschema bereitstellt.

12. Betriebsfähiges Computerprogramm, das, wenn es auf einem Computer ausgeführt wird, die Verfahrensschritte nach einem der Ansprüche 1 bis 10 ausführen kann.

## Revendications

1. Procédé de noeud de réseau de télécommunications sans fil, comprenant les étapes suivantes :
sélectionner un premier canal de fréquence en tant que canal de transmission ;
transmettre des informations sur ledit premier canal de fréquence ; et
déterminer un état de transmission desdites informations sur ledit canal de fréquence, dans lequel lorsque ladite détermination détermine que la transmission desdites informations sur ledit premier canal de fréquence a réussi, le procédé comprend la transmission d'autres informations sur ledit premier canal de fréquence et lorsque ladite détermination détermine que la transmission desdites informations sur ledit premier canal de fréquence a échoué, le procédé comprend la sélection d'un nouveau canal de fréquence en tant que canal de transmission et la répétition desdites transmission et détermination sur ledit nouveau canal de fréquence, et **caractérisé en ce que** lesdites informations sont codées à l'aide d'un premier schéma de codage sélectionné parmi un groupe de schémas de codage dont chacun fournit une robustesse différente et lesdites autres informations sont codées à l'aide d'un deuxième schéma de codage sélectionné parmi ledit groupe de schémas de codage, ledit premier schéma de codage fournissant une robustesse supérieure à celle dudit deuxième groupe de schémas de codage.

2. Procédé selon la revendication 1, dans lequel ladite détermination détermine que la transmission desdites informations sur ledit premier canal de fréquence a réussi à la réception d'une indication de réussite de réception en provenance d'un noeud destinataire.

3. Procédé selon la revendication 2, dans lequel ladite indication de réussite de réception est un message d'accusé de réception.

4. Procédé selon l'une quelconque des revendications précédentes, dans lequel ladite détermination détermine que la transmission desdites informations sur ledit premier canal de fréquence a échoué lorsqu'une indication de réussite de réception en provenance d'un noeud destinataire n'est pas reçue dans un certain délai.

5. Procédé selon l'une quelconque des revendications précédentes, dans lequel ladite détermination détermine que la transmission desdites informations sur ledit premier canal de fréquence a échoué à la réception d'une indication d'échec de réception en provenance d'un noeud destinataire.

6. Procédé selon la revendication 5, dans lequel ladite indication d'échec de réception est un message d'accusé de réception négatif.

7. Procédé selon l'une quelconque des revendications précédentes, dans lequel ledit nouveau canal de fréquence diffère en fréquence dudit premier canal de fréquence.

8. Procédé selon l'une quelconque des revendications précédentes, dans lequel ledit premier canal de fréquence et ledit nouveau canal de fréquence sont sélectionnés de façon aléatoire parmi un groupe de canaux de fréquence.

9. Procédé selon l'une quelconque des revendications précédentes, comprenant, à la suite de ladite sélection, l'empêchement de toute surveillance de la transmission sur ce canal de fréquence avant ladite transmission.

10. Procédé selon l'une quelconque des revendications précédentes, comprenant, lorsque ladite détermination détermine que la transmission desdites informations sur le nouveau canal de fréquence a échoué, une sélection itérative d'un autre nouveau canal de fréquence en tant que canal de transmission et la répétition desdites transmission et détermination sur chacun desdits autres nouveaux canaux de fréquence jusqu'à ce que ladite détermination détermine que la transmission desdites informations sur ledit autre nouveau canal de fréquence a réussi.

11. Noeud de réseau de télécommunications sans fil, comprenant :
une logique de sélection permettant de sélectionner un premier canal de fréquence en tant que canal de transmission ;
une logique de transmission permettant de transmettre des informations sur ledit premier canal de fréquence ; et
une logique de détermination permettant de déterminer un état de transmission desdites informations sur ledit premier canal de fréquence dans laquelle, lorsque la logique de détermination détermine que la transmission des informations sur le premier canal de fréquence a réussi, la logique de transmission permet de transmettre d'autres informations sur le premier canal de fréquence et lorsque la logique de détermination détermine que la transmission des informations sur le premier canal de fréquence a échoué, la logique de sélection permet de sélectionner une nouveau canal de fréquence en tant que canal de transmission et la logique de transmission permet de répéter la transmission et la logique de détermination permet de répéter la détermination sur le nouveau canal de fréquence, et **caractérisé en ce que** lesdites informations sont codées à l'aide d'un premier schéma de codage sélectionné parmi un groupe de schémas de codage dont chacun fournit une robustesse différente et lesdites autres informations sont codées à l'aide d'un deuxième schéma de codage sélectionné parmi ledit groupe de schémas de codage, ledit premier schéma de codage fournissant une robustesse supérieure à celle dudit deuxième groupe de codage.

12. Programme informatique permettant, lorsqu'il est exécuté sur un ordinateur, de réaliser les étapes du procédé selon l'une quelconque des revendications 1 à 10.
